# EUROPÄISCHE PATENTSCHRIFT

(11) **EP 1 953 013 B1**
(45) Veröffentlichungstag und Bekanntmachung des Hinweises auf die Patenterteilung: **26.12.2012**
(21) Anmeldenummer: 07020958.0
(22) Anmeldetag: 26.10.2007
(51) Int. Cl.: B60G 17/02, B60G 15/06, H02K 7/06

(54) **Höhenverstellvorrichtung für Radaufhängungen von Kraftfahrzeugen**
Height adjustment device for wheel suspensions in motor vehicles
Dispositif de réglage en hauteur pour suspensions de roues de véhicules automobiles

(30) Priorität: 31.01.2007 DE 102007004747
(43) Veröffentlichungstag der Anmeldung: 06.08.2008
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A2- 1 927 486
- WO-A1-02/08001
- WO-A1-2006/012858
- DE-A1- 19 510 032
- DE-A1- 19 935 865
- FR-A1- 2 840 257
- JP-A- 11 108 100
- JP-A- 2001 080 336
- JP-A- 2001 301 436
- JP-A- 2004 338 490

## Beschreibung

Die Erfindung betrifft eine Höhenverstellvorrichtung für Radaufhängungen von Kraftfahrzeugen gemäß dem Oberbegriff des Patentanspruches 1.

Eine Höhenverstellvorrichtung der gattungsgemäßen Art ist in der WO 2006/012858 A1 beschrieben. Dabei ist seitlich des Teleskop-Stoßdämpfers einer Federbein-Radaufhängung ein Elektromotor angeordnet, der über einen Zahnradtrieb einen als Gewindering ausgebildeten Federteller der Tragfeder verdreht. Der Gewindering ist auf einem Gewindeabschnitt des Dämpferrohres angeordnet. Durch elektromotorisches Verdrehen des Gewinderinges kann eine Höhenverstellung der Karosserie des Kraftfahrzeuges bewirkt werden, z. B. von einer Hochniveaustellung über eine Normalniveaustellung in eine Tiefniveaustellung. Die Tragfeder wird dabei bei der Niveaueinstellung mit dem Gewindering verdreht, die Federrate als solches bleibt unverändert.

Aus der JP 2001 301 436 A ist eine Radaufhängung bekannt, mittels der die Fahrzeughöhe angepasst werden kann. Ein Federteller wird hier mittels einer Schraubanordnung elektromotorisch in der Höhe verstellt, um die Höhenanpassung vorzunehmen.

Die DE 195 10 032 A1 betrifft einen Federträger innerhalb eines Fahrwerks eines Kraftfahrzeugs zur Abstützung einer zwischen zwei Federtellern verspannten Schraubenfeder. Als Antriebseinheit dient ein Elektromotor, wobei zwischen der Drehachse des Elektromotors und einen die Feder abstützenden Federteller ein Schneckengetriebe angeordnet ist.

Eine weitere Höhenverstellvorrichtung ist aus der JP 2001 080 336 A bekannt. Konkret wird hierbei basierend auf einer Sensorinformation mittels eines Bewegungsmechanismus ein Federsitz in einer vertikalen Richtung, basierend auf den Sensorinformationen, verstellt.

Aufgabe der Erfindung ist es, die Höhenverstellvorrichtung der gattungsgemäßen Art derart weiterzubilden, dass eine leichtgängige, präzise Verstellung bei einer baulich und funktionell günstigen und montageleichten Anordnung erzielbar ist.

Diese Aufgabe wird erfindungsgemäß mit den Merkmalen des Patentanspruches 1 gelöst. Vorteilhafte Weiterbildungen der Erfindung beinhalten die weiteren Patentansprüche.

Gemäß Anspruch 1 wird vorgeschlagen, dass die Verstellvorrichtung ein am Dämpferrohr in sich drehbar gelagertes und axial unverschiebbar gehaltenes Hülsenelement aufweist, welches bei einer Betätigung der Verstellvorrichtung eine koaxial zum Hülsenelement angeordnete Außenhülse so verlagert, dass damit ein Federanschlag und damit ein Tragfederende für eine Höhenniveauverstellung zwischen beispielsweise einem Hochniveau, einem Normalniveau und einem Tiefniveau auf einfache und baulich kompakte Weise möglich wird. Mit einem derartigen Aufbau wird insbesondere erreicht, dass die Tragfeder bei der Niveauverstellung nicht verdreht wird und somit in üblicher Weise am Aufbau des Kraftfahrzeuges abgestützt werden kann. Erfindungsgemäß ist vorgesehen, dass das Hülsenelement mit der Außenhülse über einen Kugelschraubtrieb mit zwischen dem Außengewinde des Hülsenelementes und dem Innengewinde der Außenhülse angeordneten Kugeln wirkverbunden ist. Mit einem derartigen Kugelschraubtrieb wird eine besonders hohe Präzision und Leichtgängigkeit der Verstellvorrichtung auf einfache Weise sichergestellt.

Gemäß einer besonders bevorzugten Ausgestaltung wird vorgeschlagen, dass das Stellgetriebe einen auf einer Innenhülse drehbar gelagerten, axial unverschiebbar gehaltenen Stellring aufweist, der mit der z. B. an einem Federteller angeordneten Außenhülse und dazwischen befindlichen Kugeln einen Kugelschraubtrieb bildet, wobei der Stellring bevorzugt mittels eines Getriebes über z. B. einen Elektromotor verdrehbar ist.

Besonders vorteilhaft können z. B. die Innenhülse, der Stellring, der Federteller mit Außenhülse, sowie der Elektromotor mit dem Getriebe eine Montageeinheit bilden, die auf das Gehäuse des Stoßdämpfers aufsteckbar ist. Damit können ohne wesentliche bauliche Änderungen Kraftfahrzeuge mit oder ohne Höhenverstellvorrichtungen aufgebaut werden.

Dabei kann in fertigungstechnisch besonders einfacher Weise die Innenhülse mit einem Bereich kleineren Innendurchmessers an Ausbuchtungen des Gehäuses des Stoßdämpfers axial abgestützt sein. Insbesondere kann hierzu gemäß einer konkreten Ausgestaltung vorgesehen sein, am Innenumfang der Innenhülse Taschen auszubilden, die voneinander in Umfangsrichtung gesehen so beabstandet sind, dass in diese die dämpferrohrseitigen Ausbuchtungen im Wesentlichen formschlüssig eingreifen können, um die Innenhülse unverdrehbar und axial gehalten am Dämpferrohr abzustützen. Bevorzugt sind die Ausbuchtungen hier durch einfach auszubildende Nocken gebildet. Gemäß einer besonders bevorzugten Ausgestaltung hierzu kann vorgesehen sein, drei Nocken am Umfang des Dämpferrohrs vorzusehen, die in etwa um 120° voneinander beabstandet sind. Dementsprechend hat dann die Innenhülse drei ebenfalls um in etwa 120° beabstandete Taschen. Eine solche konkrete Ausgestaltung, wie sie zuvor beschrieben worden ist, hat den Vorteil, dass sich damit auf einfache und funktionssichere Weise eine eindeutige Lagezuordnung der Verstelleinheit auf dem Dämpferbein erzielen lässt.

Des weiteren kann der Stellring mittels zweier, axial zueinander beabstandeter Schrägschulter-Wälzlager axial unverschiebbar auf der Innenhülse drehbar gelagert sein. Daraus resultiert eine breite und stabile Abstützbasis für den Stellring mit über den Kugelschraubtrieb bewirkter, robuster Führung des verstellbaren Federtellers der Tragfeder bzw. Radaufhängung.

Der z. B. Elektromotor als Antriebsvorrichtung kann in vorteilhafter Weise über einen Zahnradtrieb mit einem antreibenden Zahnritzel und einem am Stellring angeordneten Zahnrad auf den Stellring wirken, wobei der Elektromotor bzw. dessen Antriebsritzel im nichtaktivierten (stromlosen) Zustand festgebremst ist. Als Bremse kann z. B. eine elektromagnetische Reibungsbremse dienen. Anstelle dieser Bremse kann aber auch ein Freilauf zum Einsatz kommen, welcher ebenfalls elektrisch geschaltet und somit vor Motoreingriff freigegeben werden kann. Mit einer derartigen Bremse, die gemäß einer besonders bevorzugten Ausgestaltung auf der Niedrigmomentseite der Verstelleinheit liegt, d. h. dass zwischen der Bremse und dem Stellring die Übersetzung des Kugelgewindetriebes und der Getriebestufe liegt, kann auf besonders einfache Weise die Verdrehung des Stellrings aufgrund der Axialkraft der Feder verhindert werden. Das Getriebe könnte jedoch auch ein selbsthemmendes Schneckengetriebe mit einer Schnecke auf der antreibenden Motorwelle und einem Schneckenrad auf dem Stellring sein.

In bevorzugter Weise kann ferner z. B. der Elektromotor mit einem Winkelcodierer zum Einstellen definierter Niveaustellungen der Karosserie des Kraftfahrzeuges versehen sein; es könnten aber auch die axiale Position des Federtellers oder der an den Federteller angeformten Außenhülse messtechnisch erfasst werden.

Zur einfachen und baulich günstigen Beeinflussung der Federrate der Tragfeder wird zudem vorgeschlagen, dass innerhalb der Tragfeder ein um die Kolbenstange des Stoßdämpfers herum angeordneter, am Aufbau abgestützter, gummielastischer Anschlagpuffer vorgesehen ist und dass der Anschlagpuffer mit Bezug zur Position des verstellbaren Federtellers so angeordnet ist, dass er in der Tiefniveaustellung unmittelbar als Zusatzfeder wirksam ist. Grundsätzlich kommt die Zusatzfeder bei jeder Niveaulage zum Einsatz, und zwar dergestalt, dass sie im Tiefniveau bereits gleich zu Anfang wirkt, während sie bei der Stellung Hochniveau bevorzugt erst relativ spät zum Einsatz kommt.

Des weiteren können zwischen einem unteren Flansch der Innenhülse und dem Federteller eine den Stellring und das Getriebe abdeckende, gummielastische Schutzmanschette und/oder zwischen einem oberen Flansch der Innenhülse und der Außenhülse des Federtellers eine gummielastische Schutzmanschette angeordnet sein, die eine störungsfreie Funktion der Höhenverstellvorrichtung auch bei erschwerten Betriebsbedingungen sicherstellen.

Schließlich kann die Außenhülse des Federtellers mit einem radial nach innen ragenden Flansch versehen sein, der in Umfangsrichtung formschlüssig auf einem Außenumfangsbereich der Innenhülse axial verschiebbar geführt ist. Damit können ggf. auftretende Wechselwirkungen bzw. Verdrehmomente zwischen der Tragfeder und der Verstellvorrichtung beim Ein- und Ausfedern der Radaufhängung bzw. im Fahrbetrieb zuverlässig ausgeschlossen werden.

Ein Ausführungsbeispiel der Erfindung ist im folgenden mit weiteren Einzelheiten näher erläutert. Die schematische Zeichnung zeigt in:
- Fig. 1: eine teilweise dargestellte Radaufhängung eines Kraftfahrzeuges, mit einem Federbein und einer Höhenverstellvorrichtung; und
- Fig. 2: die Höhenverstellvorrichtung in einem senkrechten Längsschnitt durch das Federbein.

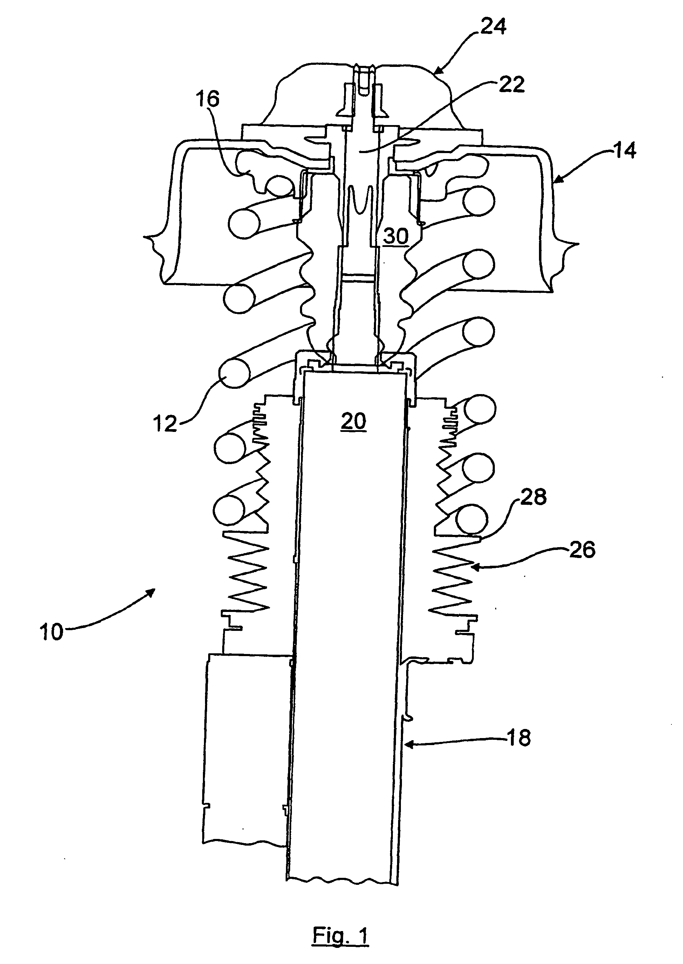

In der **Fig. 1** ist ein Federbein 10 einer vorderen Radaufhängung für Kraftfahrzeuge teilweise dargestellt, mit einer als Schraubendruckfeder ausgebildeten Tragfeder 12, die im oberen Bereich über eine Lagerkonsole 14 und einem Dämpfungsring 16 am nicht dargestellten Aufbau der Karosserie des Kraftfahrzeuges abgestützt ist.

Die Tragfeder 12 ist um einen Teleskop-Stoßdämpfer 18 herum angeordnet, dessen zylindrisches Dämpferrohr 20 an einem (oder mehreren) unteren, nicht dargestellten Radaufhängungselement angelenkt ist, während dessen Kolbenstange 22 über ein Dämpferlager 24 mit der Lagerkonsole 14 verbunden ist.

Im unteren Bereich ist die Tragfeder 12 mittels eines über eine Höhenverstellvorrichtung 26 axial verstellbaren Federtellers 28 in noch zu beschreibender Weise am Dämpferrohr 20 des Stoßdämpfers 18 abgestützt.

Zwischen der freien Stirnseite des Dämpferrohres 20 und der Lagerkonsole 14 ist wie ersichtlich eine gummielastische Zusatzfeder 30 um die Kolbenstange 22 herum vorgesehen, die konstruktiv derart ausgelegt ist, dass sie in einer definierten Niveaustellung (Abstand Lagerkonsole 14 zum Dämpferrohr 20 des Stoßdämpfers 18) an der freien Stirnseite des Dämpferrohres 20 zur Anlage kommt und die Federrate der Tragfeder 12 zunehmend erhöht.

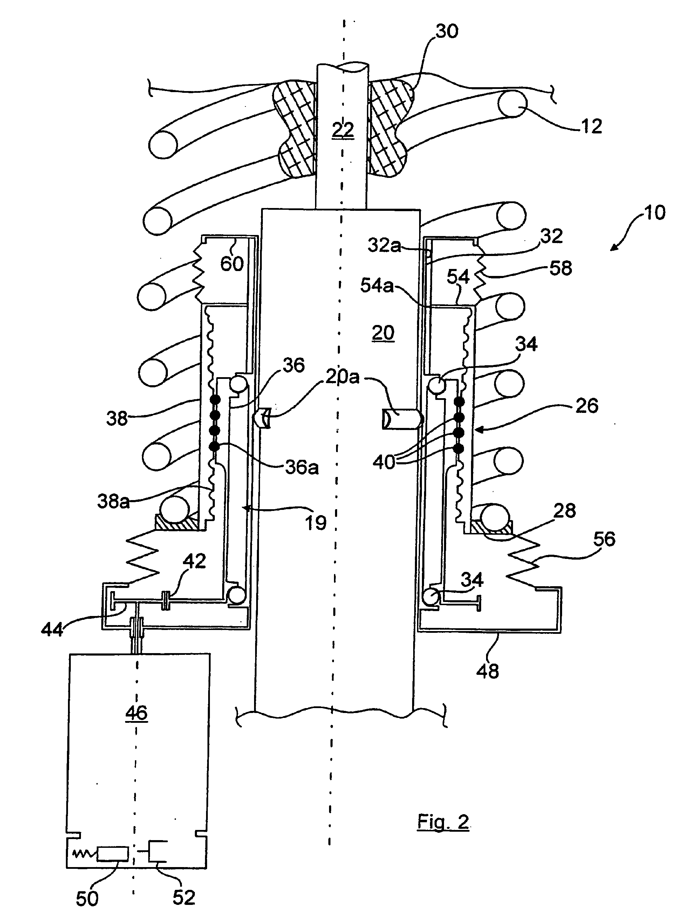

Gemäß **Fig. 2** setzt sich die Höhenverstellvorrichtung 26 zusammen aus einer rotationssymmetrischen Innenhülse 32, auf der mittels zweier, axial zueinander beabstandeter, Schrägschulter-Kugellager 34 ein Stellring 36 drehbar, jedoch axial unverschiebbar gelagert ist. Der Stellring 36 und die Innenhülse 32 bilden hier eine erste, innere Hülse bzw. ein Hülsenelement 19 aus, wobei der Stellring 36 zudem an seinem Außenumfang als Gewinde ausgeführte Kugelbahnen 36a aufweist, die mit korrespondierenden Kugelbahnen 38a einer an den Federteller 28 angeformten, zylindrischen Außenhülse 38 und dazwischen eingesetzten Kugeln 40 einen Kugelschraubtrieb bilden. Durch Verdrehen des Stellringes 36 relativ zur Außenhülse 38 wird durch entsprechendes Abwälzen der Kugeln 40 in den Kugelbahnen 36a, 38a die Außenhülse 38 mit dem Federteller 28 axial verschoben.

An den Stellring 36 ist im Bereich des unteren Schrägschulterlagers 34 ein radial nach außen abragendes Zahnrad 42 angeformt, das mit einem Antriebsritzel 44 eines seitlich und achsparallel zum Stoßdämpfer 18 angeordneten Elektromotors 46 kämmt. Der Elektromotor 46 ist unmittelbar an einem radial abragenden, unteren Flansch 48 der Innenhülse 32 befestigt. In dem Elektromotor 46 ist in nicht näher dargestellter Weise eine elektromagnetisch lösbare, federnd vorgespannte Bremse 50 und ein Winkelcodierer 52 vorgesehen. Zur Herstellung einer Verdrehsicherung für den Federteller 28 ist ein radial nach innen ragender Flansch.54 der Außenhülse 38 auf einem oberen Abschnitt der Innenhülse 32 axial verschiebbar, jedoch in Umfangsrichtung über in Längsnuten 32a eingreifende Vorsprünge 54a formschlüssig geführt. Konkreter Hintergrund ist hier, dass die Federenden über dem Federweg nicht starr in ihrer einmal eingenommenen Position verbleiben, sondern sich in etwa in einer Größenordnung von bis zu 10 bis 15° verdrehen. D. h., dass der Federteller 28 mitsamt Außenhülse sich unweigerlich verdrehen würde, obwohl die Bremse den Motor festhält. Hier schafft die Verdrehsicherung 54 mitsamt den hier nicht im Detail dargestellten Vorsprüngen 54a Abhilfe. Die Verdrehung des Stellrings 36 aufgrund der Axialkraft (d. h. der Betriebskraft der Feder), verhindert dagegen die Bremse 50, die auf der sogenannten Niedrigmomentenseite der Verstelleinheit liegt. D. h., dass zwischen der Bremse und dem Stellring 36 sowohl die Übersetzung des Kugelgewindetriebes als auch der Getriebestufe liegt. Auch bei dieser Anordnung der Bremse handelt es sich um ein wesentliches Merkmal der vorliegenden Erfindungsidee. Anstelle der Bremse, die insbesondere durch eine elektromagnetische Reibungsbremse gebildet ist, kann allerdings gemäß einer alternativen Ausführungsform auch ein Freilauf zum Einsatz kommen, der ebenfalls elektrisch geschaltet und somit vor Motoreingriff freigegeben werden kann.

Die Innenhülse 32 ist wie ersichtlich mit einem Bereich kleineren Innendurchmessers an mehreren in Umfangsrichtung beabstandeten Ausbuchtungen 20a des Dämpferrohres 20 des Stoßdämpfers 18 axial abgestützt, wozu an der Innenhülse 32 entsprechend zugeordnete Taschen ausgebildet sind, in die die nockenartigen Ausbuchtungen 20a eingreifen können. Damit kann die gesamte Verstellvorrichtung 26 mit dem Elektromotor 46 als eine Montageeinheit in einfacher Weise auf das Dämpferrohr 20 von oben her aufgesetzt werden, während bei einer Radaufhängung 10 ohne Höhenverstellvorrichtung 26 lediglich ein Adapterteil (nicht dargestellt) mit einem angeformten Federteller 28 zu montieren ist. Anstelle der Einheit 46 kann auch ein elektrisch schaltbarer Freilauf vorgesehen sein, wie er lediglich schematisch in **Fig. 1** dargestellt ist.

Wie aus **Fig. 2** ferner ersichtlich ist, ist zwischen dem unteren Flansch 48 der Innenhülse 32 und dem Federteller 28 eine den Stellring 36 und den Zahnradtrieb 42, 44 abdeckende, gummielastische Schutzmanschette 56 vorgesehen. Eine weitere Schutzmanschette 58 ist zwischen einem oberen Flansch 60 der Innenhülse 32 und der Außenhülse 38 des Federtellers 28 vorgesehen.

Es sei angenommen, die Höhenverstellvorrichtung 26 befindet sich in einer Position, in der der Federteller 28 eine Normalniveaustellung der Karosserie des Kraftfahrzeuges definiert.

Durch entsprechende Ansteuerung des Elektromotors 46 mit gleichzeitigem Lösen dessen innerer Bremse 50 wird der Stellring 36 über den Zahnradtrieb 42, 44 im Uhrzeigersinn oder gegenläufig verdreht, wobei die Außenhülse 38 mit dem Federteller 28 in die Hochniveaustellung angehoben oder in die Tiefniveaustellung (vgl. **Fig.** 1) abgesenkt wird. Die jeweilige Position des Federtellers 28 wird mittels dem in den Elektromotor 46 integrierten Winkelcodierer 52 in einem nicht dargestellten, elektronischen Steuergerät erfasst und exakt gesteuert. Nach der Niveauverstellung wird der Elektromotor 46 wieder stromlos geschaltet, wobei zugleich die federnd vorgespannte Bremse 50 im Elektromotor 46 dessen Antriebswelle mit dem Zahnritzel 44 wieder festbremst. Eine unbeabsichtigte Veränderung der eingestellten Niveaustellung ist damit ausgeschlossen.

In der Tiefniveaustellung der Höhenverstellvorrichtung (**Fig. 1**) gerät die Zusatzfeder 30 an der freien Stirnseite des Dämpferrohres 20 des Stoßdämpfers 18 in Wirkstellung und erhöht bei Einfederbewegungen der Radaufhängung zunehmend die Federrate der Tragfeder 12.

Die Einstellung der Niveaustellungen der Karosserie des Kraftfahrzeuges über den Kugelschraubtrieb 36a, 38a, 40 erfolgt konstruktionsbedingt stufenlos, so dass ggf. auch Zwischenniveaustellungen einstellbar sind, die abhängig von Betriebsparametern des Kraftfahrzeuges (z. B. Geschwindigkeit, Fahrbahnunebenheiten, etc.) über ein entsprechendes Steuergerät einstellbar wären.

## Patentansprüche

1. Höhenverstelleinrichtung für Radaufhängungen von Kraftfahrzeugen, mit einem ein Dämpferrohr (20) sowie eine Tragfeder (12) aufweisenden Stoßdämpfer (18), wobei sich die Tragfeder (12) mit ihren Tragfederenden wenigstens einseitig an einem dämpferrohrseitigen Federteller (28) abstützt, und mit einer Verstellvorrichtung, mittels der die Lage des dämpferrohrseitigenFedertellers (28) veränderbar ist, wobei die Verstellvorrichtung ein am Dämpferrohr (20) in sich drehbar gelagertes und axial unverschiebbar gehaltenes Hülsenelement (19) aufweist, das bei einer Betätigung der Verstellvorrichtung eine koaxial zum Hülsenelement (19) angeordnete Außenhülse (38) so verlagert, dass damit der Federteller (28) verlagerbar ist, **dadurch gekennzeichnet, dass** das Hülsenelement (19) mit der Außenhülse (38) über einen Kugelschraubtrieb mit zwischen dem Außengewinde des Hülsenelementes (19) und dem Innengewinde der Außenhülse (38) angeordneten Kugeln (40) wirkverbunden ist.

2. Höhenverstellvorrichtung nach Anspruch 1, **dadurch gekennzeichnet, dass** zwischen dem Federteller (28) der Tragfeder (12) und dem koaxialen Dämpferrohr (20) des Teleskop-Stoßdämpfers die Verstellvorrichtung eingeschaltet ist, die teilweise innerhalb der Tragfeder (12) und um das Dämpferrohr (20) herum angeordnet ist und die ein auf den Federteller (28) wirkendes Stellgetriebe (26) aufweist, das von einer Antriebsvorrichtung (46) angetrieben ist.

3. Höhenverstellvorrichtung nach Anspruch 1 oder 2, **dadurch gekennzeichnet, dass** das Hülsenelement (19) durch einen auf einer Innenhülse (32) drehbar gelagerten, axial unverschiebbar gehaltenen Stellring (36) gebildet ist, der mit der integral einen Federteller (28) ausbildenden Außenhülse (38) zusammenwirkt.

4. Höhenverstellvorrichtung nach Anspruch 2 und 3, **dadurch gekennzeichnet, dass** der Stellring (36) mittels eines Getriebes (42, 44) über die Antriebsvorrichtung (46) verdrehbar ist.

5. Höhenverstellvorrichtung nach einem der Ansprüche 1 bis 4, **dadurch gekennzeichnet, dass** das Hülsenelement (19) der Federteller (28) mit Außenhülse (38) sowie die Antriebsvorrichtung, eine Montageeinheit bilden, die auf das Dämpferrohr (20) des Stoßdämpfers (18) aufsteckbar ist.

6. Höhenverstellvorrichtung nach Anspruch 5, **dadurch gekennzeichnet, dass** die Innenhülse (32) mit einem Bereich kleineren Innendurchmessers an Ausbuchtungen (20a) des Dämpferrohres (20) des Stoßdämpfers (18) axial abgestützt ist, wobei die Innenhülse (32) am Innenumfang Taschen aufweist, die jeweils den in Umfangsrichtung um das Dämpferrohr (20) herum beabstandeten Ausbuchtungen (20) zugeordnet sind.

7. Höhenverstellvorrichtung nach einem der Ansprüche 3 bis 6, **dadurch gekennzeichnet, dass** der Stellring (36) mittels zweier, axial zueinander beabstandeter Schrägschulterlager (34) axial unverschiebbar auf der Innenhülse (32) drehbar gelagert ist.

8. Höhenverstellvorrichtung nach einem der Ansprüche 4 bis 7, **dadurch gekennzeichnet, dass** die Antriebsvorrichtung (46) über einen Zahnradtrieb mit einem antreibenden Zahnritzel (44) und einem am Stellring (36) angeordneten Zahnrad (42) auf den Stellring (36) wirkt

9. Höhenverstellvorrichtung nach einem der Ansprüche 2 bis 8, **dadurch gekennzeichnet, dass** die Antriebsvorrichtung (46) der dessen Antriebsritzel (44), im nichtaktivierten Zustand mit einer elektromagnetischen Bremse oder einer elektrisch schaltbaren Freilaufbremsefestgebremst ist.

10. Höhenverstellvorrichtung nach einem der Ansprüche 2 bis 9, **dadurch gekennzeichnet, dass** die Antriebsvorrichtung (46) mit einem Winkelcodierer (52) zum Einstellen definierter Niveaustellungen der Karosserie des Kraftfahrzeuges versehen ist.

11. Höhenverstellvorrichtung nach einem der Ansprüche 1 bis 10, **dadurch gekennzeichnet, dass** innerhalb der Tragfeder (12) ein um eine Kolbenstange (22) des Stoßdämpfers (18) herum angeordneter, am Aufbau abgestützter, gummielastischer Anschlagpuffer (30) vorgesehen ist, und dass der Anschlagpuffer (30) mit Bezug zur Position des verstellbaren Federanschlags bzw. Federtellers (28) so angeordnet ist, dass er in der Tiefniveaustellung unmittelbar als Zusatzfeder wirksam ist.

12. Höhenverstellvorrichtung nach einem der Ansprüche 3 bis 11, **dadurch gekennzeichnet, dass** zwischen einem unteren Flansch (48) der Innenhülse (32) und einem Federanschlag bzw. Federteller (28) eine den Stellring (36) und ein Getriebe (42, 44) abdeckende, gummielastische Schutzmanschette (56) vorgesehen ist.

13. Höhenverstellvorrichtung nach einem der Ansprüche 3 bis 12, **dadurch gekennzeichnet, dass** zwischen einem oberen Flansch (60) der Innenhülse (32) und der Außenhülse (38) des Federtellers (28) eine gummielastische Schutzmanschette (58) angeordnet ist.

14. Höhenverstellvorrichtung nach einem der Ansprüche 3 bis 13, **dadurch gekennzeichnet, dass** die Außenhülse (38) des Federtellers (28) mit einem radial nach innen ragenden Flansch (54) versehen ist, der in Umfangsrichtung formschlüssig auf einem Außenumfangsbereich der Innenhülse (32) axial verschiebbar geführt ist.

## Claims

1. Height adjustment device for wheel suspensions in motor vehicles, comprising a shock absorber (18) which comprises a damper tube (20) and a bearing spring (12), the bearing spring (12) being supported by its bearing spring ends on at least one side on a damper-tube-side spring plate (28), and comprising an adjustment device, by means of which the position of the damper-tube-side spring plate (28) can be changed, the adjustment device comprising a sleeve element (19) which is rotatably mounted per se on the damper tube (20), is held in an axially non-displaceable manner and, when the adjustment device is actuated, displaces an outer sleeve (38) arranged coaxially with the sleeve element (19) in such a way that the spring plate (28) is displaceable therewith, **characterised in that** the sleeve element (19) is operatively connected to the outer sleeve (38) via a ball screw drive comprising balls (40) arranged between the external thread of the sleeve element (19) and the internal thread of the outer sleeve (38).

2. Height adjustment device according to claim 1, **characterised in that**, between the spring plate (28) of the bearing spring (12) and the coaxial damper tube (20) of the telescopic shock absorber, the adjustment device is inserted which is arranged in part inside the bearing spring (12) and around the damper tube (20) and comprises a control gear (26) which acts on the spring plate (28) and is driven by a drive device (46).

3. Height adjustment device according to either claim 1 or claim 2, **characterised in that** the sleeve element (19) is formed by a set collar (36) which is rotatably mounted on an inner sleeve (32), is held in an axially non-displaceable manner and cooperates with the outer sleeve (38) which integrally forms a spring plate (28).

4. Height adjustment device according to claim 2 and claim 3, **characterised in that** the set collar (36) can be rotated by means of a gear mechanism (42, 44) via the drive device (46).

5. Height adjustment device according to any of claims 1 to 4, **characterised in that** the sleeve element (19), the spring plate (28) together with outer sleeve (38), and the drive device form an assembly unit which can be mounted on the damper tube (20) of the shock absorber (18).

6. Height adjustment device according to claim 5, **characterised in that** a region of relatively small inner diameter of the inner sleeve (32) is axially supported on bulges (20a) of the damper tube (20) of the shock absorber (18), the inner sleeve (32) comprising recesses on the inner periphery which are each assigned to the bulges (20) spaced around the damper tube (20) in the peripheral direction.

7. Height adjustment device according to any of claims 3 to 6, **characterised in that** the set collar (36) is rotatably mounted in an axially non-displaceable manner on the inner sleeve (32) by means of two angular contact bearings (34) which have mutual axial spacing.

8. Height adjustment device according to any of claims 4 to 7, **characterised in that** the drive device (46) acts on the set collar (36) via a gearwheel drive comprising a driving pinion (44) and a gearwheel (42) arranged on the set collar (36).

9. Height adjustment device according to any of claims 2 to 8, **characterised in that** the drive device (46) or the drive pinion (44) thereof is braked in the non-activated state by an electromagnetic brake or an electrically switchable freewheeling brake.

10. Height adjustment device according to any of claims 2 to 9, **characterised in that** the drive device (46) is provided with an angle encoder (52) for setting defined level positions of the body of the motor vehicle.

11. Height adjustment device according to any of claims 1 to 10, **characterised in that** a rubber-elastic bump stop (30) which is arranged around a piston rod (22) of the shock absorber (18) and is supported on the vehicle body is provided inside the bearing spring (12), and **in that** the bump stop (30) is arranged in relation to the position of the adjustable spring stop or spring plate (28) in such a way that said bump stop acts directly as an overload spring in the low-level position.

12. Height adjustment device according to any of claims 3 to 11, **characterised in that** a rubber-elastic boot (56) which covers the set collar (36) and a gear mechanism (42, 44) is provided between a lower flange (48) of the inner sleeve (32) and a spring stop or spring plate (28).

13. Height adjustment device according to any of claims 3 to 12, **characterised in that** a rubber-elastic boot (58) is arranged between an upper flange (60) of the inner sleeve (32) and the outer sleeve (38) of the spring plate (28).

14. Height adjustment device according to any of claims 3 to 13, **characterised in that** the outer sleeve (38) of the spring plate (28) is provided with a radially inwardly projecting flange (54) which is guided in the peripheral direction with positive locking on an outer peripheral region of the inner sleeve (32) in an axially displaceable manner.

## Revendications

1. Dispositif de réglage en hauteur pour suspensions de roues de véhicules automobiles, comprenant un amortisseur de chocs (18) présentant un tube amortisseur (20) ainsi qu'un ressort de suspension (12), dans lequel le ressort de suspension (12) s'appuie par ses extrémités au moins d'un côté sur une cuvette de ressort (28) côté tube amortisseur, et un dispositif de réglage au moyen duquel la position de la cuvette de ressort (28) côté tube amortisseur peut être modifiée, dans lequel le dispositif de réglage présente un élément tubulaire (19) monté à rotation sur le tube amortisseur (20) en soi et maintenu axialement sans pouvoir coulisser, lequel élément déplace, lors d'une commande du dispositif de réglage, une douille externe (38) aménagée coaxialement sur l'élément tubulaire (19) de sorte que la cuvette de ressort (28) puisse ainsi être déplacée, **caractérisé en ce que** l'élément tubulaire (19) est efficacement lié à la douille externe (38), via une commande à vis et billes avec des billes (40) disposées entre le filet externe de l'élément tubulaire (19) et le filet interne de la douille externe (38).

2. Dispositif de réglage en hauteur selon la revendication 1, **caractérisé en ce qu'**entre la cuvette de ressort (28) du ressort de suspension (12) et le tube amortisseur coaxial (20) de l'amortisseur de chocs télescopique est imbriqué le dispositif de réglage qui est aménagé en partie à l'intérieur du ressort de suspension (12) et autour du tube amortisseur (20) et qui présente un mécanisme de réglage (26) agissant sur la cuvette de ressort (28), lequel mécanisme est entraîné par un dispositif d'entraînement (46).

3. Dispositif de réglage en hauteur selon la revendication 1 ou la revendication 2, **caractérisé en ce que** l'élément tubulaire (19) est formé par un anneau de réglage (36) monté à rotation sur une douille interne (32) et maintenu fixe axialement, lequel anneau de réglage coopère avec la douille externe (38) faisant partie intégrante d'une cuvette de ressort (28).

4. Dispositif de réglage en hauteur selon la revendication 2 et la revendication 3, **caractérisé en ce que** l'anneau de réglage (36) peut être soumis à une rotation au moyen d'une transmission (42, 44) via le dispositif d'entraînement ( 46 ) .

5. Dispositif de réglage en hauteur selon l'une quelconque des revendications 1 à 4, **caractérisé en ce que** l'élément tubulaire (19) de la cuvette de ressort (28) avec la douille externe (38) ainsi que le dispositif d'entraînement forment une unité de montage qui peut être enfichée sur le tube amortisseur (20) de l'amortisseur de chocs (18).

6. Dispositif de réglage en hauteur selon la revendication 5, caractérisé en ce la douille interne (32) s'appuie axialement par une zone de diamètre interne plus petit sur des indentations (20a) du tube amortisseur (20) de l'amortisseur de chocs (18), dans lequel la douille interne (32) présente sur sa périphérie interne des poches qui sont respectivement affectées aux indentations (20) espacées autour du tube amortisseur (20) dans la direction périphérique.

7. Dispositif de réglage en hauteur selon l'une quelconque des revendications 3 à 6, **caractérisé en ce que** l'anneau de réglage (36) est monté à rotation sur la douille interne (32), de manière fixe axialement, au moyen de deux paliers d'épaulement obliques (34) écartés axialement l'une de l'autre.

8. Dispositif de réglage en hauteur selon l'une quelconque des revendications 4 à 7, **caractérisé en ce que** le dispositif d'entraînement (46) agit sur l'anneau de réglage (36) via un engrenage avec un pignon menant (44) et une roue dentée (42) agencée sur l'anneau de réglage (36).

9. Dispositif de réglage en hauteur selon l'une quelconque des revendications 2 à 8, **caractérisé en ce que** le dispositif d'entraînement (46) de ses pignons d'entraînement (44) est freiné de manière fixe à l'état non activé par un frein électromagnétique ou un frein à roue libre qui peut être enclenché électriquement.

10. Dispositif de réglage en hauteur selon l'une quelconque des revendications 2 à 9, **caractérisé en ce que** le dispositif d'entraînement (46) est pourvu d'un codeur angulaire (52) pour régler des positions de niveau définies de la carrosserie du véhicule automobile.

11. Dispositif de réglage en hauteur selon l'une quelconque des revendications 1 à 10, **caractérisé en ce qu'**il est prévu à l'intérieur du ressort de suspension (12) un tampon de butée (30) élastique comme le caoutchouc s'appuyant sur la carrosserie et aménagé autour d'une tige de piston (22) de l'amortisseur de chocs (18) et **en ce que** le tampon de butée (30) est aménagé par rapport à la position de la butée de ressort ou de la cuvette de ressort réglable (28) de sorte qu'il soit directement efficace comme ressort d'appoint dans le réglage de bas niveau.

12. Dispositif de réglage en hauteur selon l'une quelconque des revendications 3 à 11, **caractérisé en ce qu'**il est prévu entre une bride inférieure (48) de la douille interne (32) et une butée de ressort ou une cuvette de butée (28) un soufflet de protection (56) élastique comme le caoutchouc recouvrant l'anneau de réglage (36) et une transmission (42, 44).

13. Dispositif de réglage en hauteur selon l'une quelconque des revendications 3 à 12, **caractérisé en ce qu'**un soufflet de protection (58) élastique comme le caoutchouc est aménagé entre une bride supérieure (60) de la douille interne (32) et la douille externe (38) de la cuvette de ressort (28).

14. Dispositif de réglage en hauteur selon l'une quelconque des revendications 3 à 13, **caractérisé en ce que** la douille externe (38) de la cuvette de ressort (28) est pourvue d'une bride (54) dépassant radialement vers l'intérieur, laquelle bride est guidée de manière à permettre un coulissement axial dans la direction périphérique en mode mécanique sur une zone de la périphérie externe du boîtier interne (32).
